Europäisches Patentamt

European Patent Office

Office européen des brevets

(11) Publication number: **0 192 073**
**B1**

# EUROPEAN PATENT SPECIFICATION

(45) Date of publication of patent specification: **03.05.89**

(51) Int. Cl.⁴: **B 65 G 53/58,** F 23 C 11/02

(21) Application number: **86100806.8**

(22) Date of filing: **22.01.86**

(54) **Pressure reducing device for a pneumatic transport device for particulate material.**

(30) Priority: **28.01.85 SE 8500378**

(43) Date of publication of application:
**27.08.86 Bulletin 86/35**

(45) Publication of the grant of the patent:
**03.05.89 Bulletin 89/18**

(84) Designated Contracting States:
**AT BE CH DE FR GB IT LI LU NL SE**

(56) References cited:
**EP-A-0 108 505**
**WO-A-83/03557**

(73) Proprietor: **ASEA STAL Aktiebolag**
**S-721 83 Västeras (SE)**

(72) Inventor: **Brännström, Roine**
**S, Pirvägen 38**
**S-612 00 Finspong (SE)**

(74) Representative: **Boecker, Joachim, Dr.-Ing.**
**Rathenauplatz 2-8**
**D-6000 Frankfurt a.M. 1 (DE)**

Courier Press, Leamington Spa, England.

## Description

The invention relates to a pressure reducing device according to the precharacterising part of claim 1. A pressure reducing device of this kind is known from the EP—A—108 505.

The pressure reducing device according to the invention is particularly intended for transport devices for the transmission of particulate material from a first container, which is under a high pressure, to a second container, which is under a lower pressure, as for example a transport device for continuous removal of dust from a dust separator for cleaning of combustion gases in a pressurized fluidized bed combustion plant, abbreviated "PFBC" plant, to a collecting container for separated dust located outside the pressure vessel that encapsulates the fluidized bed combustor and the cleaning equipment of the plant. It can also be used for other purposes, for example as a unit (nozzle) in a sand blasting plant.

The EP—A—108 505 describes in detail a pneumatic transport device for conveying a particulate material from a first container, which is under high pressure, to a second container, which is under lower pressure. This document shows the transport device applied to a PFBC plant for the removal of separated dust from series-connected dust separators, for example cyclones, in a pressure vessel to a container outside the pressure vessel. The transport device also comprises a tube system in which the gas/dust flow is bent repeatedly in order to successively reduce the pressure to atmospheric level. The pressure reduction is performed in a large number of stages. The transport device is made in the form of a cooler and placed in the pressure vessel so that it is cooled by the combustion air thereby preheating the latter to recover part of the thermal energy from the transport gas and the dust.

The pressure in the pressure vessel may amount to 1.0—2 MPa (10—20 bar). The pressure varies with the load, usually between about 0.3 and 1.5 MPa (3—15 bar). During the passage through the series-connected cyclones, the pressure drops somewhat, thus obtaining different pressures in the different cyclones. This must be taken into account when designing the dust discharge system so that an acceptable transport capacity can be maintained at different loads and pressures and so that any flow of gas from an upstream cyclone to a downstream cyclone through the discharge system is prevented. The first problem can be solved by the provision of switching devices, as disclosed in the EP—A—84112887.9. With these devices the flow path through the discharge system is changed by putting in action a differently large number of the available tube parts. The second problem can be solved by connecting the different series-connected cyclones at different points in the tube package of the discharge system, as shown in the above-mentioned EP—A—108 505.

In the last mentioned document the transition of the particulate material from the cyclone into the discharge system can be obtained, among other ways, by providing the cyclone at its bottom with a tube and arranging inside this tube a second tube of considerably smaller diameter which represents the first tube of the discharge device. The entrance of this inner second tube is provided with a nozzle to achieve a laminar flow and to reduce erosion at the entrance.

The invention aims at the design of a pressure reducing device for a pneumatic transport device for particulate material having the following properties:

1. a great throttling ability to negoatiate large pressure drops,

2. a considerable long lifetime,

3. the capacity of operating favorably in cases with considerable variations in pressure difference between a delivering and a receiving container, thus allowing to obtain in a PFBC plant a simplified dust discharge system operating satisfactorily at varying loads in spite of the fact that the level in the pressure vessel varies greatly with the load.

To achieve this aim the invention suggests a pressure reducing device according to the introductory part of claim 1, which is characterized by the features of the characterizing part of claim 1.

Further developments of the invention are characterized by the features of the additional claims.

According to the invention, for example in a PFBC plant, a pressure reducing device is introduced near the dust-gas outlet from the dust separator, the pressure reducing device having such a great throttling ability that the pressure after the throttling is less than the pressure in the lowermost downstream dust separator of the row of series-connected dust separators. This prevents a harmful gas stream from an upstream dust separator to a downstream dust separator in the discharge system when connecting all the series-connected dust separators to a common conveying pipe. A suitable pressure drop in the pressure reducing device is 0.05—0.2 MPa (0.5—2 bar), that is, considerably greater than the pressure drop at a bend in the cooling portion. The throttle means at the different dust separators suitably have a different throttling ability, an upstream dust separator being provided with a pressure reducing device near a downstream dust separator. This makes it possible to connect all the dust separators to the same point in the cooling portion without the risk of overflow from an upstream dust separator to a downstream dust separator via the cyclone legs.

It may also be appropriate to locate, between the cooling portion and the receiving container, a pressure reducing device with a great throttling ability and a by-pass line with a valve, parallel to said pressure reducing device, in order to obtain, at low load and upon start-up, suitable flow conditions in the cooling portion in case of a suitable dimensioning of said portion for full load conditions. The manufacture of the cooling portion can also be simplified. All tube parts and end pieces for the diversion of the flow may be identical, which results in low manufacturing costs.

At high pressures (full load operation) the gas/material flow passes through said pressure reducing device. At low pressures (partial load operation and start-up) the gas/material flow is directed through said bypass line past the pressure reducing device in order to obtain sufficient transport speed in the cooled pressure-reducing part. The size of the cooled part is dependent on the extent to which it is desired to recover the heat contents of the dust and the transport air for preheating of the combustion air.

According to the invention, the throttling arrangement includes a throttle means immediately after the point of diversion. This throttle means consists of a nozzle at the inlet to the second channel. The opening area $F_1$ in the nozzle is considerably smaller than the area $F_2$ immediately downstream of the nozzle, the second channel. The area ratio may vary within wide limits but should be greater than 10:1, preferably between 100:1 and 600:1.

The two channels of the pressure reducing device are suitably coaxial and consist of two cylinders, the first channel being wider and annular and surrounding the second, narrower channel. The inner cylinder, which forms the narrower channel, has a limited length. At one end it is connected to the nozzle and at its other end it is closed and connected to a radially oriented downstream transport channel between its mid-point and the nozzle. The portion with the closed end forms an appendix-like blind space.

The invention will now be described in greater detail with reference to the accompanying drawings showing — by way of example — in

Figure 1 schematically a section through a pressure reducing device,

Figure 2 a section through a nozzle along line A—A in Figures 1 and 4,

Figure 3 schematically a PFBC plant with a throttle means in a dust discharge system,

Figure 4 a pressure reducing device adjacent to a cyclone outlet,

Figure 5 the pressure reducing device as an outlet for contaminated gas from a lock hopper container,

Figure 6 the pressure reducing device utilized for reduction of the gas pressure in case of a source of natural gas,

Figures 7 and 8 schematically sectional views of a blast nozzle utilizing a pressure reducing valve according to the invention, and

Figure 9 a preferred embodiment of the pressure reducing valve.

In the drawings, 10 designates a pressure reducing device. It comprises a first wider transport channel 12 and a second narrower transport channel 14, that is, an upstream transport channel with a larger outside diameter than the downstream transport channel. The pressure reducing device 10 comprises two concentric cylinders 16 and 18, respectively. The cylinder 16 is closed at one end 20. The cylinder 18 is placed in the cylinder 16 near the closed end 20 thereof thus defining a space 22. At the end of the cylinder 18 facing the space 20 there is a nozzle 24 with an opening 26 with an area $F_1$, which is considerably smaller than the area $F_2$ in the channel 14 into which the opening 26 opens out. The opposite end of the cylinder 18 is closed by a lid 28 thereby forming an appendix-like blind space 30. The lid 28 is constructed so as to be resistant to erosion by the inrushing particulate material. The cylinder 18 is connected to a radial outlet tube 32, suitably disposed near the nozzle 24. Particulate material flows in the annular transport channel 12, as shown by the arrows 34, down into the space 22 where it is bent 180°, as shown by the arrows 36, on its way into the opening 26. Solid material is thrown up into the blind space 30, in the innermost part of which a cushion 38 of material is formed protecting the lid 28 from erosion. Particulate material and transport gas leave the transport channel 14 through the tube 32.

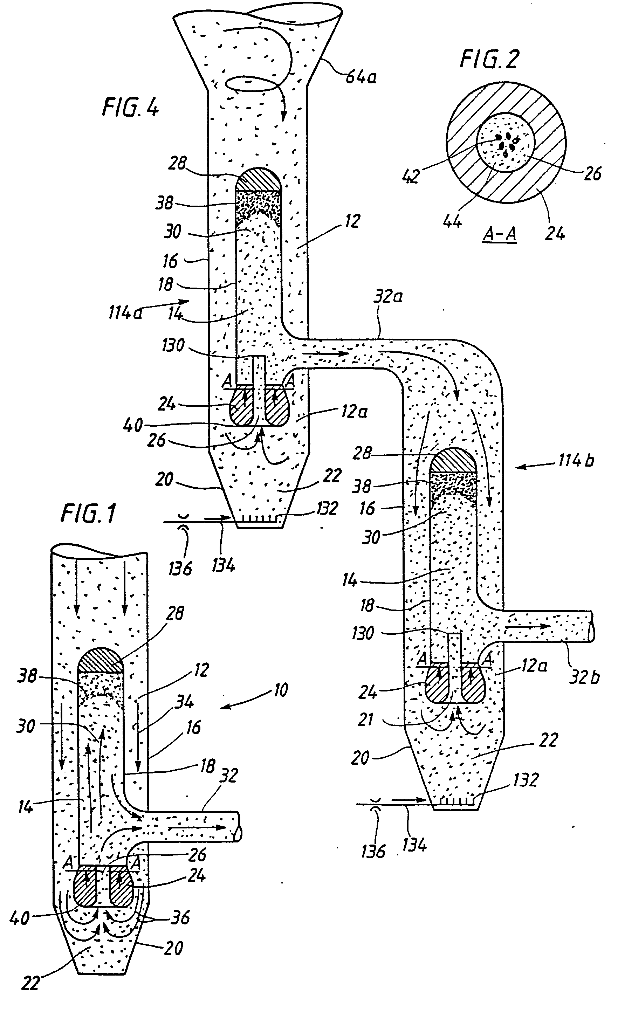

As shown in the figures, the inlet side of the nozzle 24, which faces the space 22, is shaped so that in a radial section its generatrix 40 is arcuated. This generatrix 40 may, for example, in part describe an ellipse or a circle. With a suitable arcuate shape such flow conditions are obtained that the particle concentration is lower in the peripheral area of the nozzle opening 26 than in its central area. In addition, larger particles 42, which are the most dangerous with regard to erosion, are concentrated in the central area of the opening 26 whereas smaller particles 44 will flow to a greater extent in the outer area of the opening, as shown in Figure 2. This effect is achieved by the 180° bend and a suitable shape of the generatrix 40. Because of a small mass and inertia, insignificant energy is required for bending small particles 44. Therefore, these particles will to a great extent be rapidly bent and thus flow near the side wall of the nozzle opening 26. Because of their larger mass and inertia, more energy is required for bending larger particles 42, so that these will flow in a wider arch at their bending in the space 22 and therefore to a greater extent more centrally through the opening 26. When the inlet side of the nozzle is suitably shaped, it has been found that hardly any erosion is caused at all. A coating may even become deposited on the inlet side.

Since the opening 26 opens out into the transport channel 14 having a much larger cross-sectional area than the opening 26, the pressure loss will be very great and the desired pressure fall can be obtained with one single or few series-connected pressure reducing devices. Pressure drops exceeding 0.1 MPa (1 bar) can be achieved in a pressure reducing device of suitable design.

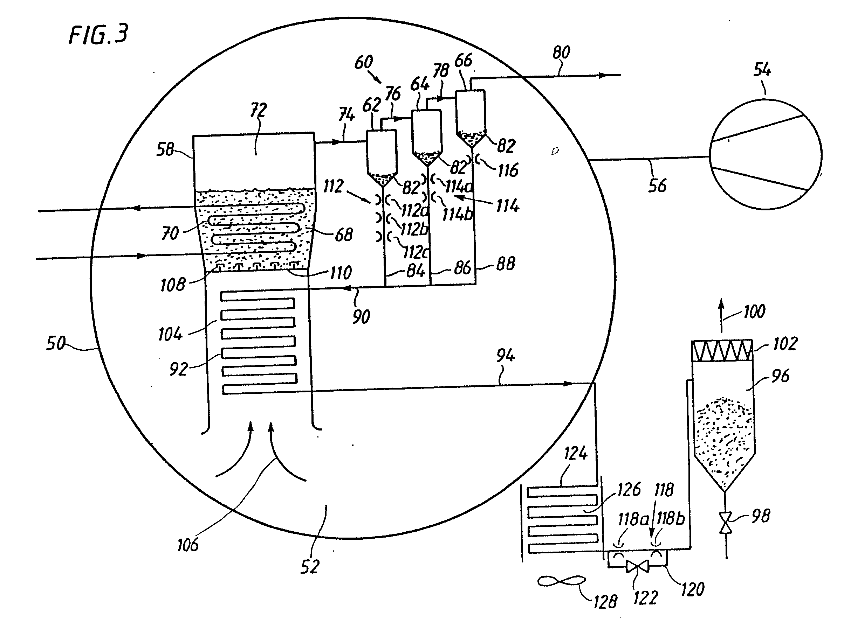

In Figure 3, numeral 50 designates a container under pressure. The space 52 is supplied with compressed air from a compressor 54 via a conduit 56. The container 50 accommodates a combustion chamber 58 and a number of parallel-connected groups 60, only one of which is shown, of series-connected dust separators 62, 64 and 66, for example cyclones, for the separation of dust from the combustion gases generated in the combustion chamber 58. The lower part of the combustion chamber 58 includes a fluidizable bed 68 of granular material and a tube nest 70 for cooling the bed 68 and for generating steam for a steam turbine (not shown). The combustion gases leaving the bed 68 accumulate in the freeboard 72 above the bed 68 and are passed through the conduit 74 to the first dust separator 62, for example a cyclone, and thereafter further to the series-connected dust separators 64 and 66 through the conduits 76 and 78. Dust (ashes) is separated in the dust separators 62, 64 and 66. The cleaned gases leaving the dust separator 66 are led to a gas turbine (not shown) via the conduit 80. This gas turbine can drive the compressor 54 and/or a generator.

Dust 82 separated in the dust separators are continuously transported away in a pneumatic transportation system. This system comprises conduits 84, 86, 88, a common collecting conduit 90 which is connected to a cooler 92 for cooling dust and transport gas, a conduit 94, and a container 96 where dust is separated from the transport gas. The container 96 is situated outside the pressure vessel 50. Dust is discharged via the valve 98. Transport air 100 is removed via a filter 102 to the atmosphere. The cooler 92 may be designed as the transport device according to the above-mentioned EP—A—83306073.4, whereby the pressure is successively reduced by repeatedly diverting the gas/dust flow between a number of series-connected tube parts. The cooler 92 may be placed in a channel 104 which conducts combustion air 106 from the space 52 in the pressure vessel 50 to the nozzles 108 in the bottom 110 of the combustion chamber 58.

Figure 3 shows three series-connected pressure reducing devices 112a—112c in the conduit 84, two series-connected pressure reducing devices 114a and 114b in the conduit 86, one pressure reducing device 116 in the conduit 88, and two pressure reducing devices 118a and 118b in the conduit 94. The total throttling ability may vary both by constructing pressure reducing devices with different throttling ability and by connecting in series different numbers of pressure reducing devices 118 having equal or different throttling ability. A bypass conduit 120 with a valve 122 may be provided parallel to the pressure reducing devices 118. The pressure reducing devices 118 and the bypass conduit 120 with the valve 122 may be located inside the pressure vessel 50 or, as in Figure 3, outside this vessel. Outside the pressure vessel 50 there may be a second cooler 124 in a channel 126, through which cooling air is injected by means of a fan 128. Possibly, this latter cooler 124 may replace the pressure reducing devices 118. The second cooler 124 may be used when it is not possible to obtain sufficient cooling by means of the combustion air down to a desired temperature of at most 150°C prior to entry into the container 96.

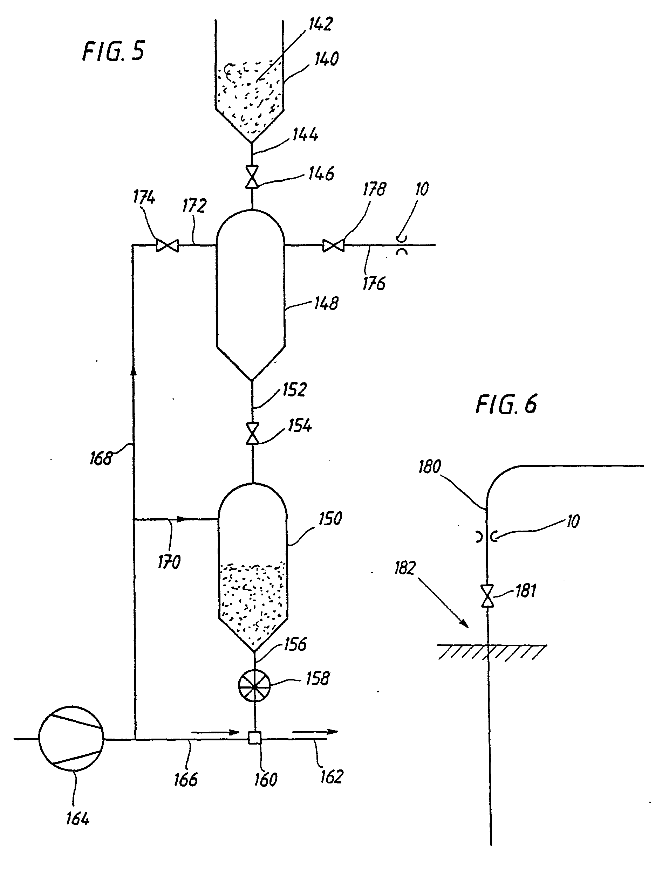

In all essentials the pressure reducing devices 112, 114 and 116 in the PFBC plant are designed in the same way as the pressure reducing device 10. The cylinder 16 of the pressure reducing device 114a is — as shown in Figure 4 — directly connected to the lower conical part 64a of the dust separator 64. However, in this embodiment the nozzle 24 has a larger outer diameter than the cylinder 18 so that a constriction arises in the channel portion 12a. This can affect the flow at the nozzle inlet. Further, the nozzle 24 has a greater axial extension than in the embodiment according to Figure 1. The nozzle is connected to a tube 130, so that a flow path with a constant cross-section and a considerable length is obtained. In this way, a smaller change of the pressure reducing effect at decreasing pressure can be obtained since the acceleration distance of the particles will be longer in case of reduced density of the transport gas. Further, nozzles 132 are provided in the lower part of the space 22, through which nozzles gas may be supplied to the space 22 fluidizing the downfalling dust which has been separated in the dust separator 64. For fluidization, air from the space 52 can be utilized since the pressure here exceeds the pressure in the space 22. The air is supplied through the conduit 134. For determining the air quantity in this conduit, an adjustable throttle means 136 is provided.

The dust/gas flow flows over from the pressure reducing device 114a to the pressure reducing device 114b through the outlet conduit 32a. The dust/gas flow leaves the pressure reducing device 114b through the outlet tube 32b being connected to the conduit 86.

The pressure reducing device may also be included in a feeding-out conduit for bed material from the fluidized bed in a PFBC power plant. In front of the pressure reducing device there is suitably placed a cooler, in which the bed material is cooled prior to passage through valves in the conveying pipe.

In the lock hopper system according to Figure 5, there is a first container 140 filled with, for example, crushed coal 142. The container 140 is constantly under atmospheric pressure. It is connected via the conduit 144 with the valve 146 to the container 148. The container 148, in its turn, communicates with the container 150 via the conduit 152 with the valve 154. The container 150 is connected, via the conduit 156 with the rotary feeder 158, to the ejector 160 in the fuel conveying pipe 162. The ejector is supplied with transport gas from the compressor 164 through the conduit 166. The containers 148 and 150 communicate with the gas conduit 166 via the conduits 168, 170 and 168, 172, respectively. The conduit 172 includes a valve 174. The container 148 can be connected to the atmosphere through a conduit 176 with a valve 178 and a pressure reducing device 10. When material in the container has been transferred from the container 140 to the container 148 at atmospheric pressure therein, the valves 146 and 178 are closed and the valve 174 opened, thus pressurizing the container 148.

The valve 154 is then opened, and the material is transferred to the container 150, whereupon the valve 154 is closed again. Thereafter, the pressure is reduced by opening the valve 178. The flow is throttled in the pressure reducing device 10 to obtain suitable outflow conditions. Since the pressure reducing device 10 is provided in the outlet conduit 176, the valve 178 may be an on-off valve, which is most advantageous since the gas in the container is contaminated by solid abrasive particles. Because of the pressure reducing device the valve can be formed with a large flow area, resulting in a low velocity of flow and, hence, in a small erosion by the solid particles in the gas.

Figure 6 shows the pressure reducing device 10 placed after a valve 181 in a conduit 180 from a natural gas source 182. The pressure of the gas in the gas source may amount to several hundred bar, and therefore it needs reducing before the gas is released into a conveying pipe. The pressure reducing device according to the invention is extremely suitable for this purpose, since it is very insensitive to solid impurities which accompany the gas. Also in this case, of course, a plurality of pressure reducing devices may be connected in series, as shown in Figure 4.

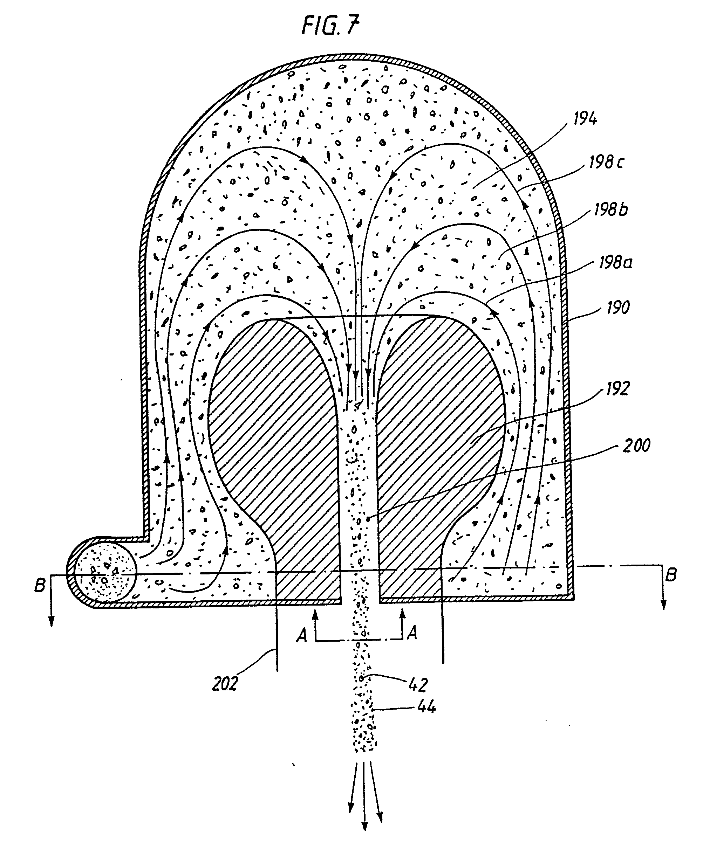

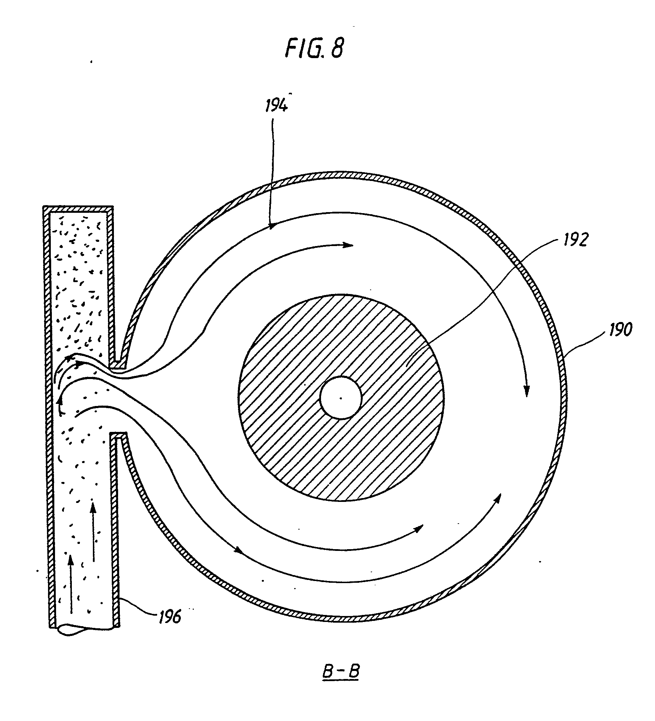

The pressure reducing device according to the invention can also be used in a blast nozzle for accelerating the blast material to a high speed. The construction of such a device is shown in Figures 7 and 8. A housing 190 accommodates a nozzle 192. Compressed air and blast material are supplied to the space 194 through the conduit 196. In the space 194 the material/gas flow is diverted, as shown by the paths 198a to 198c. Small particles with a small mass require little power to be diverted and follow a narrowly arcuated inner path 198a. A heavier mass requires more power and follows a middle path 198b, and the heaviest particles follow an outer path 198c. At the nozzle opening 200 the larger, heavier particles will to a large extent be collected in the central portion of the opening 200, and the lighter particles will to a larger extent be collected in the peripheral portion of the opening 200. Around the orifice of the nozzle 192, a sleeve 202 is arranged which has a considerably larger diameter than the opening 200. Since the main part of the blasting material passes through the nozzle without contacting its walls, the wear of the nozzle is insignificant so that the nozzle will have a much longer life than blast nozzles used in the state of the art.

A uniform blasting effect can be obtained during a long period of time. This is an extremely great advantage in the case of automated blasting by means of a robot.

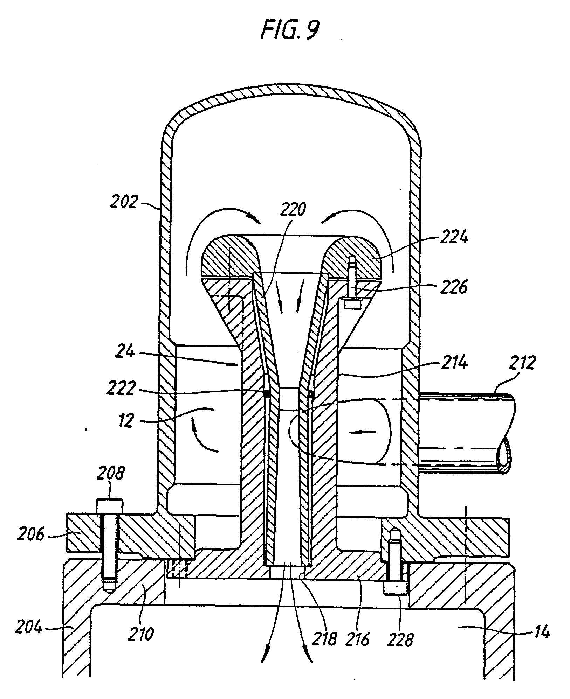

Figure 9 shows a preferred practical embodiment of the pressure reducing device. The first transport channel 12 is here formed as a cup-shaped housing 202 and a nozzle 24 composed of several parts, and the second transport channel 14 is formed of a tube 204. The first channel 12 is thus annular. The housing 202 is formed with a flange 206 and joined to the flange 210 of the tube 204 by means of the flange 206 and bolts 208. A gas/particle flow is supplied to the pressure reducing device via a tube 212 which is tangentially connected to the housing 202. The nozzle 24 is built up of a sleeve 214 with an outer flange 216 and an inner flange 218, a tube 220 extending down into the sleeve 214, said tube 220 resting on the inner flange 218 and being sealed against the sleeve 214 by an O-ring 222. A ring 224 is joined to the sleeve 214 by a number of bolts 226, the ring thereby fixing the nozzle 220 in the sleeve 214. The nozzle 24 is joined to the housing 202 by the flange 216 of the sleeve 214 and a number of bolts 228.

The embodiment according to Figure 9 is very favourable. The nozzle 220 and the ring 224, which are subjected to the greatest stresses, can be made from a material with great resistance to wear, for example from a metal alloy having good wear resistance, a hard metal (cemented carbides), or a ceramic material. The consumption of expensive material is limited, and the parts which are worst exposed to wear can be replaced. The embodiment is advantageous with regard to manufacture, cost and service.

## Claims

1. Pressure reducing device for a pneumatic transport device for particulate material or for the transport of a gas containing solid impurities comprising a first transport channel (12) and a second transport channel (14), the two transport channels being arranged so that, at the transition between the first transport channel (12) and the second transport channel (14), the gas/material flow is bent through an angle of the order of magnitude of 180°, characterized in that a throttle means (26) is provided downstream of the bend, which consists of a nozzle (24) forming an inlet to the second transport channel (14) and that, at the transition between the nozzle (24) and the second transport channel (14), the flow area increases suddenly and considerably from the area $F_1$ of the nozzle to the area $F_2$ of the second transport channel (14).

2. Pressure reducing device according to Claim 1, characterized in that the area ratio $F_2:F_1$ is greater than 10, preferably between 100 and 600.

3. Pressure reducing device according to Claim 1 or 2, characterized in that the nozzle (24) is annular and the inlet side rounded with a generatrix which is arcuate in the radial section.

4. Pressure reducing device according to any of the preceding claims, characterized in that the transport channels (12, 14) are arranged coaxially to each other and that the first transport channel (12) is wider than and surrounds the second, narrower transport channel (14).

5. Pressure reducing device according to any of the preceding Claims, characterized in that the transport channels (12, 14) are formed by two concentric cylinders (16, 18), the inner cylinder (18) at one end being connected to the nozzle (24) and at the other end forming an appendix-like blind space (30).

6. Pressure reducing device according to claim 5, characterized in that a downstream transport channel (32) is radially connected to the inner cylinder (18) between its mid-point and the nozzle (24).

7. Pressure reducing device according to any of the preceding claims, characterized in that it is included in a transport device for transportation of particulate material from a first container (62, 64, 66) with a high pressure to a second container (96) with a considerably lower pressure.

8. Pressure reducing device according to any of claims 1—6, characterized in that it is included in a dust discharge system for the removal of dust from a dust separator (62, 64, 66) in a PFBC plant, the dust separator forming a first container, to a collecting container (96).

9. Pressure reducing device according to claim 8, characterized in that it is arranged close to the outlet from said dust separator.

10. Pressure reducing device according to claim 8, characterized in that it is arranged in the lower part of a cyclone or other dust separator.

11. Pressure reducing device according to claim 8, characterized in that one pressure reducing device (10) is arranged upstream of a gas/dust cooler (92) and another pressure reducing device is arranged downstream of said gas/dust cooler (92).

12. Pressure reducing device according to any of the preceding claims, characterized in that it is included in an exhaust conduit (176) from a container (148) in a lock hopper system.

13. Pressure reducing device according to claim 1, characterized in that it is included in a gas conduit (180) from a natural gas source (182).

14. Pressure reducing device according to claim 1, characterized in that it is included in a sand blast nozzle.

15. Pressure reducing device according to any of claims 1 to 3, characterized in that it is built up of a housing (202), a nozzle (24) detachably attached therein which forms the throttle means (26) and which together with the housing (202) forms the first transport channel (12), and a tube, detachably attached to the housing (202), which forms the second transport channel (14).

16. Pressure reducing device according to any of claims 1 to 3, or 14, characterized in that in its application in cases in which atmospheric pressure prevails at the outlet of the nozzle, for example in a sand blast nozzle, said second channel may consist of a mere sleeve (202).

## Patentansprüche

1. Druckreduziervorrichtung für eine pneumatische Transportvorrichtung für partikelförmiges Material oder für den Transport von Gas, welches feste Verunreinigungen enthält, mit einem ersten Transportkanal (12) und einen zweiten Transportkanal (14), wobei die beiden Transportkanäle derart angeordnet sind, daß am Übergang vom ersten Transportkanal (12) zum zweiten Transportkanal (14) der Gas/Materialfluß um einen Winkel in der Größenordnung von 180° umgelenkt wird, dadurch gekennzeichnet, daß strömungsmäßig unterhalb der Umlenkstelle eine Drosselvorrichtung (26) angeordnet ist, die aus einem Mundstück (24) besteht, welches den Eingang in den zweiten Transportkanal (14) bildet, und daß an der Übergangsstelle zwischen dem Mundstück (24) und dem zweiten Transportkanal (14) der Strömungsquerschnitt sich plötzlich und beträchtlich von der Fläche $F_1$ des Mundstückes auf die Fläche $F_2$ des zweiten Transportkanals (14) erweitert.

2. Druckreduziervorrichtung nach Anspruch 1, dadurch gekennzeichnet, daß das Querschnittsverhältnis $F_2:F_1$ größer als 10 ist, vorzugsweise zwischen 100 und 600 liegt.

3. Druckreduziervorrichtung nach einem der Ansprüche 1 oder 2, dadurch gekennzeichnet, daß das Mundstück (24) ringförmig ausgebildet ist und die Eintrittsseite im radialen Bereich bogenförmig abgerundet ist.

4. Druckreduziervorrichtung nach einem der vorhergehenden Ansprüche, dadurch gekennzeichnet, daß die Transportkanäle (12, 14) coaxial zueinander angeordnet sind und daß der erste Transportkanal (12) weiter als der zweite engere Transportkanal (14) ist und den letzteren umgibt.

5. Druckreduziervorrichtung nach einem der vorhergehenden Ansprüche, dadurch gekennzeichnet, daß die Transportkanäle (12, 14) von zwei konzentrischen Zylindern (16, 18) gebildet werden, von denen der innere Zylinder (18) an einem Ende an das Mundstück (24) angeschlossen ist und an dem anderen einen sackgassenähnlichen toten Raum (30) bildet.

6. Druckreduziervorrichtung nach Abspruch 5, dadurch gekennzeichnet, daß ein abströmseitig gelegener Transportkanal (32) radial an den inneren Zylinder zwischen dessen Mitte und dessen Mundstück (24) angeschlossen ist.

7. Druckreduziervorrichtung nach einem der vorhergehenden Ansprüche, dadurch gekennzeichnet, daß sie Teil einer Vorrichtung für den Transport eines partikelförmigen Materials aus einem ersten Behälter (62, 64, 66) mit hohem Druck in einen zweiten Behälter (96) mit beträchtlich niedrigerem Druck ist.

8. Druckreduziervorrichtung nach einem der Ansprüche 1—6, dadurch gekennzeichnet, daß sie Teil einer Anlage zur Abführung von Staub aus einem einen ersten Behälter bildenden Staubseparator (62, 64, 66) einer PFBC-Anlage in einen Sammelbehälter (96) ist.

9. Druckreduziervorrichtung nach Anspruch 8, dadurch gekennzeichnet, daß sie nahe der Austrittsöffnung aus dem Staubseparator abgeordnet ist.

10. Druckreduziervorrichtung nach Anspruch 8, dadurch gekennzeichnet, daß sie im unteren Teil eines Zyklons oder eines anderen Staubseparators angeordnet ist.

11. Druckreduziervorrichtung nach Anspruch 8, dadurch gekennzeichnet, daß eine Druckreduziervorrichtung (10) strömungsmäßig oberhalb eines Gas/Staubkühlers (92) angeordnet ist und eine

weitere Druckreduziervorrichtung strömungsmäßig unterhalb des genannten Gas/Staubkühlers (92) angeordnet ist.

12. Druckreduziervorrichtung nach einem der vorhergehenden Ansprüche, dadurch gekennzeichnet, daß sie in einer Abführrleitung (176) von einem Behälter (148) in einer Hochdruckbunkeranlage angeordnet ist.

13. Druckreduziervorrichtung nach Anspruch 1, dadurch gekennzeichnet, daß sie in einer Gasleitung (180) angeordnet ist, die von einer Naturgasquelle (182) kommt.

14. Druckreduziervorrichtung nach Anspruch 1, dadurch gekennzeichnet, daß sie Teil eines Sandgebläsemundstücks ist.

15. Druckreduziervorrichtung nach einem der Ansprüche 1—3, dadurch gekennzeichnet, daß sie aufgebaut ist aus einem Gehäuse (202), einem darin abnehmbar angeordneten Mundstück (24), welches die Drosselvorrichtung (26) bildet und welches zusammen mit dem Gehäuse (202) den ersten Transportkanal (12) bildet, und einem Rohr, welches abnehmbar an dem Gehäuse (202) angebracht ist und den zweiten Transportkanal (14) bildet.

16. Druckreduziervorrichtung nach Anspruch 1—3 oder 14, dadurch gekennzeichnet, daß in Anwenndungsfällen, in welchen atmosphärischer Druck auf der Austrittsseite des Mundstückes herrscht, beispielsweise in einem Sandstrahlmundstück, der genannte zweite Kanal aus einer bolßen Hülse (202) bestehen kann.

## Revendications

1. Dispositif de réduction de pression pour un dispositif de transport pneumatique, prévu pour un matériau sous forme de particules ou pour le transport d'un gaz contenant des impuretés solides, comprenant un premier conduit de transport (12) et un second conduit de transport (14), les deux conduits de transport étant disposés de façon qu'à la transition entre le premier conduit de transport (12) et le second conduit de transport (14), l'écoulement de gaz/matériau subisse un changement de direction sur un angle de l'ordre de 180°, caractérisé en ce que des moyens d'étranglement (26) sont placés en aval du changement de direction, ces moyens consistant en une buse (24) qui forme une entrée du second conduit de transport (14), et en ce qu'à la transition entre la buse (24) et la second conduit de transport (14), la section d'écoulement augmente considérablement et de façon abrupte, en passant de la section $F_1$ de la buse à la section $F_2$ du second conduit de transport (14).

2. Dispositif de réduction de pression selon la revendication 1, caractérisé en ce que le rapport des sections $F_2$:$F_1$ est supérieur à 10 et est de préférence compris entre 100 et 600.

3. Dispositif de réduction de pression selon la revendication 1 ou 2, caractérisé en ce que la buse (24) est annulaire et le côté d'entrée est arrondi, avec un génératrice de forme courbe, en coupe radiale.

4. Dispositif de réduction de pression selon l'une quelconque des revendications précédentes, caractérisé en ce que les conduits de transport (12, 14) sont disposés de façon mutuellement coaxiale, et en ce que le premier conduit de transport (12) est plus large que le second conduit de transport (14), plus étroit, et il entoure ce dernier.

5. Dispositif de réduction de pression selon l'une quelconque des revendications précédentes, caractérisé en ce que les conduits de transport (12, 14) sont formés par deux cylindres concentriques (16, 18), et une extrémité du cylindre intérieur (18) est reliée à la buse (24), tandis que l'autre extrémité forme un espace ne débouchant pas (30), semblable à un appendice.

6. Dispositif de réduction de pression selon la revendication 5, caractérisé en ce qu'un conduit de transport aval (32) est relié de façon radiale au cylindre intérieur (18) entre son milieu et la buse (24).

7. Dispositif de réduction de pression selon l'une quelconque des revendications précédentes, caractérisé en ce qu'il est incorporé dans un dispositif de transport destiné à transporter un matériau sous forme de particules d'une première enceinte (62, 64, 66) à pression élevée, vers une seconde enceinte (96) à pression notablement inférieure.

8. Dispositif de réduction de pression selon l'une quelconque des revendications 1 à 6, caractérisé en ce qu'il est incorporé dans un système d'évacuation de poussière, préu pour l'évacuation de poussière à partir d'un séparateur de poussière (62, 64, 66) dans une installation CLFP, le séparateur de poussière formant une première enceinte, et la poussière étant dirigée vers une enceinte de recueil (96).

9. Dispositif de réduction de pression selon la revendication 8, caractérisé en ce qu'il est placé à proximité de la sortie du séparateur de poussière.

10. Dispositif de réduction de pression selon la revendication 8, caractérisé en ce qu'il est placé dans la partie inférieure d'un cyclone ou d'un autre séparateur de poussière.

11. Dispositif de réduction de pression selon la revendication 8, caractérisé en ce qu'un dispositif de réduction de pression (10) est placé en amont d'un dispositif de refroidissement de gaz/poussière (92), et un autre dispositif de réduction de pression est placé en aval du dispositif de refroidissement de gaz/poussière (92).

12. Dispositif de réduction de pression selon l'une quelconque des revendications précédentes, caractérisé en ce qu'il est incorporé dans un conduit de sortie (176) partant d'une enceinte (148) dans un système de trémie sous pression.

13. Dispositif de réduction de pression selon la revendication 1, caractérisé en ce qu'il est incorporé dans un conduit de gaz (180) provenant d'une source de gaz naturel (182).

14. Dispositif de réduction de pression selon la revendication 1, caractérisé en ce qu'il est incorporé dans une buse de sablage ou de grenaillage.

15. Dispositif de réduction de pression selon l'une quelconque des revendications 1 à 3, caractérisé en ce qu'il est constitué par une cloche (202), une buse (24) fixée à l'intérieur de façon amovible, qui forme les moyens d'étranglement (26) et qui forme le premier conduit de transport (12), en association avec la cloche (202), et un tube qui est fixé de façon amovible à la cloche (202) et qui forme le second conduit de transport (14).

16. Dispositif de réduction de pression selon l'une quelconque des revendications 1 à 3 ou 14, caractérisé en ce que, dans son application dans des cas dans lesquels la pression qui existe à la sortie de la buse est la pression atmosphérique, comme par exemple dans le cas d'une buse de sablage ou de grenaillage, le second conduit peut consister en un simple cylindre (202).

FIG. 2

FIG. 4

FIG. 1

A-A

FIG.3

EP 0 192 073 B1

FIG. 5

142

140

144

146

174 172 178 10

176

148

152

154

168

170

150

156

158

164 166 160 162

FIG. 6

180

10

182 181

EP 0 192 073 B1

FIG. 7

4

FIG. 8

B-B

## FIG. 9